# EUROPEAN PATENT SPECIFICATION

(11) **EP 1 560 394 B1**
(45) Date of publication and mention of the grant of the patent: **27.02.2008**
(21) Application number: 04106396.7
(22) Date of filing: 08.12.2004
(51) Int. Cl.: H04L 29/06, H04L 12/22

(54) **Techniques for dynamically establishing and managing authentication and trust relationships**
Techniken zum dynamischen Aufbauen und Handhaben von Authentisierung und Vertrauensverhältnissen
Techniques pour établir et gérer dynamiquement des rapports d'authentification et de confiance

(30) Priority: 27.01.2004 US 765523
(43) Date of publication of application: 03.08.2005
(73) Proprietor: Novell, Inc., Provo, Utah 84606-6194 (US)
(72) Inventor: Burch, Lloyd Leon, Payson, Utah 84651 (US); Earl, Douglas G., Orem, Utah 84097 (US); Carter, Stephen R., Spanish Fork, Utah 84660 (US); Ward, Robert Mark, Highland, Utah 84003 (US)
(74) Representative: Hanna, Peter William Derek

(56) References cited:
- WO-A-00/79432
- US-A- 5 544 322
- US-A1- 2001 034 841
- US-A1- 2002 095 571
- US-A1- 2003 002 521

## Description

### Field of the Invention

The invention relates generally to network security, and more specifically to techniques for dynamically establishing and managing authentication and trust relationships.

### Background of the Invention

As connectivity to the Internet and to network applications has grown in recent years, so has the need for providing more robust network- oriented techniques for authenticating network entities. Authentication generally includes two components: an identity and a statement which can be used for verifying that identity. For example, a network client can authenticate to network service by providing a client identifier (identity) and a client password (statement for verifying the identity).
Successful authentication can establish a trusted relationship between two entities. During that trusted relationship, statements and requests made between the two entities can be relied upon or assumed to be legitimate. Trusted relationships can provide for secure and seamless interactions between trusted entities during network transactions.
Unfortunately, authentication and trusted relationships between entities are not without a significant amount of problems. First, during authentication confidential and proprietary information about one of the entities may be potentially exposed on a network wire, where it can be maliciously intercepted and used to feign the identity of that entity. Second, an entity may have a plurality of authentication techniques requiring a multitude of different confidential information that the entity uses to authenticate and establish trusted relationships, where each of the different techniques are used depending upon a role or circumstance associated with the entity. Third, an entity may not always be relied upon to represent a specific physical location (e.g., specific Internet Protocol Address). This is so because an entity may be a user that accesses a plurality of different client machines or a user that accesses a portable device which plugs into a variety of different networks or network devices as the user moves. Fourth, different circumstances, locations, or roles of an entity may require changes in the authentication techniques that are used by the entity. Fifth, disparate services seldom share authentication credentials, thus requiring an entity to authenticate multiple times.
Lastly, the identity information of any particular entity can vary substantially depending upon the service or other entity that the entity is authenticating with. Moreover, this disparate identity information can be required in different data formats by the various services and can be stored on a plurality of disparate identity data stores.
Because of the variety of security concerns, authentication techniques, and architectural arrangements of identity information and identity services, a unified mechanism for managing an entity's authentication and trust relationships have heretofore remained elusive in the industry. Consequently, entities are forced to manually manage their own authentication and trust relationships. This causes much transactional inefficiency and frustration as passwords expire (are forgotten) and services change.
Additionally, the problems are not exclusively limited to an entity's perspective (e.g., application or user perspective), because much manual management and support are still required by network administrators to keep everything secure and in synchronization, so that entities can access the resources that they need. In fact, it can become extremely time-consuming for network administrators to continually reset passwords for entities or reissue identity information in different formats as services are added or upgraded.
US-A-5544322 (Cheng et al) describes a system for defining a platform-independent policy framework for authentication of principals to servers in another realm, within a distributed data-processing network. A realm is an autonomous unit comprising partitioned computational and administrative resources within the network. The described protocol system may be implemented on top of the Kerberos protocol, or any trusted third party network authentication protocol with inter-realm authentication mechanisms. The third party supplies stored authentication information between two principals that desire to interact with one another, on request. Rules are stored for various interactions between principals which are policy-based, but there is no teaching of a contract for a single party that dictates all its permissible interactions with a variety of other principals, assembled from a variety of data stores.
Thus, improved techniques for dynamically establishing and managing authentication and trust relationships are needed.

### Summary of the Invention

The present invention provides methods and systems for dynamically establishing and managing authentication and trust relationships in accordance with claims which follow. In various embodiments of the invention, techniques are presented for dynamically establishing authentication and trust relationships between principals. An identity service manages contracts on behalf of principals. The contracts permit the identity service to acquire authentication information, aggregated attribute information, and aggregated policies which each principal needs to successfully authenticate and interact with other principals. This information is communicated to principals, who are in need of that information, in order to successfully interact with other principals. In some embodiments, policies associated with the contracts are dynamically altered during interactions between the principals and the alterations are appropriately communicated and managed.

### Brief Description of the Drawings

FIG. 1 is a flowchart representing a method for authenticating a principal;
FIG. 2 is a flowchart representing another method for authenticating a principal;
FIG. 3 is a diagram of a principal authentication system; and
FIG. 4 is a diagram representing another principal authentication system.

### Detailed Description of the Invention

In various embodiments of the invention, the term " principal" is used. A principal is an electronic representation of an entity. An entity can be a resource, a user, an agent, an application, a system, a service, a group, a department, an object, etc. An entity consumes information, provides information, provides a service to other entities over a network, or performs any combination of these operations.

In one embodiment, the term principal is consistent with how that term is generally understood in the security arts. For example, the term principal can be used in the context of Security Assertion Markup Language (SAML) which is an extension of the Extensible Markup Language (XML). SAML is used for securely processing assertions about a user or application (e. g., principal). More recently, SAML has been extended with technology referred to as Liberty. Liberty is part of the Liberty Alliance Project (LAP) and is attributed to open interoperable standards for federated network identities. Thus, the term principal can also be used in the context of Liberty technologies.

A SAML encoded statement includes an assertion, a protocol, and a binding. There are generally three types of assertions: an authentication assertion used to validate a principal's electronic identity, an attribute assertion that includes specific attributes about the principal, an authorization assertion that identifies what the principal is permitted to do (e. g., policies). The protocol defines how a SAML processing application will ask for and receive the assertions. The binding defines how SAML message exchanges are mapped to Simple Object Access Protocol (SOAP) exchanges, or other protocol exchanges.

In general terms, SAML techniques improve security between business-to-business (B2B) electronic transactions and business-to-customer (B2C) electronic transactions. The techniques permit one principal to log in with a single transaction to a receiving principal and then use a variety of the receiving principal's disparate services by providing the SAML statements when needed. SAML techniques are not limited to inter-organization relationships (e. g., B2B or B2C); the techniques can be used within a single organization (intra- organization). SAML techniques are supported with a variety of network protocols, such as Hypertext Transfer Protocol (HTTP), Simple Mail Transfer Protocol (SMTP), File Transfer Protocol (FTP), SOAP, BizTalk, and Electronic Business XML (ebXML). The Organization for the Advancement of Structured Information Standards (OASIS) is the standards group for SAML. The techniques of Liberty are enhancements to the SAML techniques and may also be used in connection with various embodiments of this invention.

However, it is to be understood that SAML and Liberty techniques are not needed to perform the teachings of all embodiments of the invention. These techniques complement some embodiments of this invention. In this sense, the integration of SAML and Liberty techniques with some of the embodiments presented herein is intended to be part of certain aspects of this invention, but not all embodiments of this invention are dependent on SAML or Liberty technology.

In a similar manner there are various other existing authentication techniques that may be practiced in connection with some embodiments of this invention. But, once again these other authentication techniques are not necessary for realizing the benefits of all embodiments of the invention. Some of these techniques include Public Key Infrastructure (PKI) techniques including public- private key pairs, digital certificates, biometric authentication, or use of conventional identifications and passwords.

An access request is an electronic request for accessing a principal. That request can be for the principal to perform some operation or for the principal to acquire and deliver some particular desired information. Identity information includes any data that is useful in establishing the identity of a principal, such as passwords, identifiers, biometric data, keys, certificates, and the like.

Security policies refer to allowance or disallowance operations (e. g., reads, writes, creates, deletes) against attribute information associated with a particular principal vis-à-vis other principals. These security policies can be expressed in more complex forms to determine a particular processing context during which operations are permitted or disallowed.

Portions of the security policies identify specific attributes, which define data store fields that identify particular pieces of confidential data housed in an identity data store (e. g., NAME, SSN, etc.). These data store fields (attributes) can be used in combination with identity information to access an identity store and acquire other confidential data about a particular principal, such as, but not limited to, social security number (SSN), credit card numbers, addresses, phone numbers, password secrets, marital status, gender, age, birth date, children, email addresses, serial numbers, registration numbers, and the like.

A contract specifies needed identity information and needed techniques or services required to authenticate a particular principal to another principal. The contract also includes directives that permit aggregated attribute information and aggregated policies to be assembled from one or more identity stores for a particular principal vis-à-vis another principal. A contract is a data structure that can be evaluated, consumed, and used for processing various transactions associated with embodiments of this invention. The contract is essentially a specification as what is required for a particular principal to be authenticated in a given situation. Moreover, the contract provides a mechanism to assemble information needed for interactions of a particular principal in a given situation. The contract may also include a global policy statement that restricts (requires or excludes) how that contract is used for accessing certain other predefined principals from predefined locations with certain other restrictions, such as access only during a certain time of day, calendar date, occurrence of some other predefined event, and the like.

A contract is consumed and evaluated for purposes of assembling authentication information, aggregate attribute information, and aggregate policies for a given principal relationship vis-à-vis a different principal. In some embodiments, a service that manages the contract represents the authentication information as a certificate. That certificate, in some embodiments, may be further expressed as an assertion (e. g., SAML and/ or Liberty). The service can combine the certificate (or assertion as the case may be) with the aggregated attribute information and the aggregated policies in a credential data structure. The service transmits the credential data structure to a principal that consumes the embedded information for purposes of successfully interacting with another principal.

Various embodiments of this invention can be implemented in existing network products and services. For example, in some embodiments, the techniques presented herein are implemented in whole or in part in the iChain ^{®} , Border Manager ^{®} , and Excelerator ^{®} products distributed by Novell, Inc., of Provo, Utah.

Of course, the embodiments of the invention can be implemented in a variety of architectural platforms, systems, or applications. For example, portions of this invention can be implemented in whole or in part in any distributed architecture platform, operating systems, proxy services, or browser/ client applications. Any particular architectural layout or implementation presented herein is provided for purposes of illustration and comprehension only and is not intended to limit the various aspects of the invention.

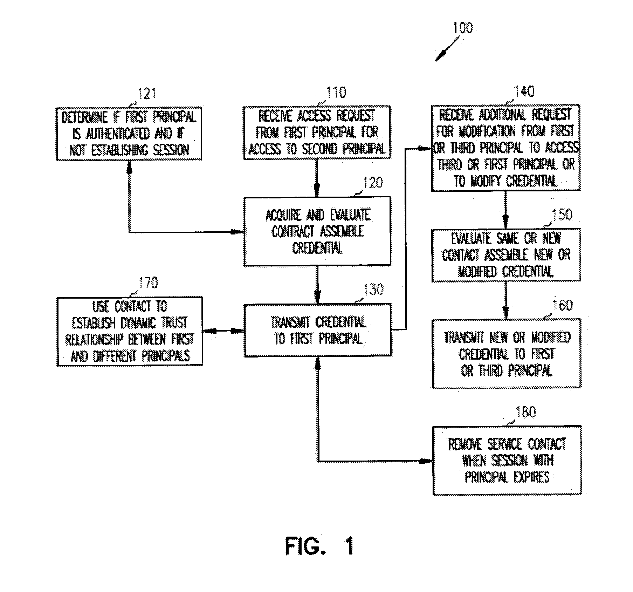

FIG. 1 is a flowchart representing one method 100 for authenticating a principal. The method 100 is implemented as one or more applications or services which reside in a computer-accessible medium and is accessible over a network. In one embodiment, the method 100 is implemented as a service that interfaces with a client service of a principal. A client is a processing device that a principal is using to interact with the client service. The client service is an interface application that interacts with the processing logic of the method 100. The method 100 need not be in operation, but when the method 100 is operational it performs the following techniques for authenticating a principal.

Initially, a first principal makes an access attempt, at 110, directed to a second principal by using a client service accessible on a client of the first principal. The client service is an interface to the processing of the method 100. In one embodiment, the client service is an applet that processes in a World-Wide Web (WWW) browser application on the client, and the processing of the method 100 is a service that interacts with the client service.

Next, at 120, the processing of the method 100 (hereinafter "processing") acquires a contract for the first principal with respect to the second principal. In some embodiments, the needed contract exists in a secure data store accessible to and managed by the processing, such that any particular contract is acquired based on identifiers associated with the first and second principals. In another embodiment, an identifier associated with the first principal permits the processing to acquire a global contract associated with that principal and from that global contract the processing uses an identifier for the second principal to dynamically derive or acquire the contract needed first and second principal interactions associated with the access request.

The contract defines authentication information, authentication techniques, and or authentication services which are needed by the first principal to properly authenticate to establish a session and interact with the second principal. That contract will also include directives that permit the processing to acquire aggregated attribute information and aggregated policies from one or more identity stores that are accessible to the processing.

Once the proper contract is acquired from the processing, it can be evaluated, at 120, for a number of purposes. For example, an initial purpose might be associated with determining whether an initial authentication of the first principal is needed for the acquired contract. Accordingly, in this situation, at 121, a check is made based on a first principal identifier, which can be included with the access request, for determining whether the first principal is already authenticated for purposes of this particular access request and acquired contract.

If the principal is not already authenticated, then, at 121, a secure session can be established between the processing and the first principal for purposes of satisfying the processing that the first principal is who he/ she purports to be. The processing can satisfy itself as to a true identity of the first principal using automated, manual, or a combination of automated and manual technique s. During the session the processing acquires identifying information about the first principal (e. g., via cookies, identifiers, passwords, biometric data, etc.). The exact technique used and information needed for authenticating the principal is provided in the contract.

Next, at 120, after the first principal is properly authenticated for the acquired contract that defines the relationship between the first and second principals, the processing continues to evaluate the contract for the first principal for purposes of generating, assembling, or acquiring a credential. The credential includes specific authentication information, authentication techniques/ services, selective aggregated attributes, and selective aggregated policies associated with the first principal vis-à-vis the second principal.

In one embodiment, the specific authentication information and authentication techniques/ services are expressed as an authentication certificate within the credential. This certificate can be used by the first principal to authenticate to or prove an existing authentication with the second principal. For example, in one embodiment, where the second principal is SAML and/ or Liberty enabled, the certificate can be expressed as an assertion which the second principal relies on as evidence that the first principal is in fact authenticated. This may be useful in embodiments where the processing authenticates the first principal to the second principal. In still other embodiments, where the second principal is a legacy service, the authentication information and authentication techniques/ services is expressed as an identifier and a password pair, which the first principal can provide to the second principal in order to authenticate.

In some embodiments, the actual authentication information (or certificate as the case may be) included within the credential can include alias identity information that the processing substitutes for original identity information associated with the first principal. The processing can update the alias identity information into one or more identity stores that require the original identity information. The first principal is entirely unaware of the alias identity information as is the second principal. When the first principal authenticates to the second principal, the second principal uses the alias identity information to authenticate with an appropriate identity store, since the processing had updated that identity store with the alias identity information, the second principal receives a successful authentication message and the first principal is properly authenticated.

In this last embodiment, alias identity information provides a number of useful benefits. First, original identity information associated with the principal is not unnecessarily exposed on network wires during transactions. Second, since only the processing maintains the mapping between the alias identity information and the original identity information, the original identity information can only be compromised if the processing is compromised. Third, if the alias identity information is compromised it will only be useful for a limited time and for a limited purpose defined by the contract. Fourth, by using alias identity information a principal does not need to manage or be aware of multiple sets of original identity information and does not need to manually change them when they expire or formats change. Fifth, alias identity information can be randomly generated for added security by the processing, such that if any particular alias identity is intercepted its format and contents cannot be derived for other situations.

In addition to the authentication information and authentication techniques/ services included within the credential, the processing assembles aggregated attributes and policies which the first principal uses in interactions with the second principal. These aggregated attributes and policies are acquired from the proper identity stores based on the directives of the contract. Moreover, the aggregated attributes and policies are included within the credential.

Once a credential is established for the contract and the initial access request, at 130, the credential is transmitted to the first principal. The credential is consumed and processed by the first principal via the first principal's client service for purposes of defining and managing the needed interactions between the first principal vis-à-vis the second principal. During these interactions, the first principal can use any certificate information included within the credential to assert and prove the identity of the first principal to the second principal. Moreover, the aggregated attributes combined with the security policies permit certain confidential data to be acquired and accessed or not accessed during the interactions from one or more identity stores. In some embodiments, the processing can access or acquire certain confidential data on behalf of the first or second principals from the one or more identity stores when requested to do so and if the contract so permits.

In one embodiment, at 140, the processing receives an additional request from the first principal for access to a third principal. In this embodiment, the processing acquires and evaluates, at 150, a new contract that defines the relationship between the first and third principal. The new contract provides the mechanism for the processing to assemble a new or second credential, which includes new authentication information, new authentication techniques/ services, new aggregated attributes, and new aggregated policies. At 160, the new or second credential is transmitted to the first principal for use in authenticating with or proving an existing authentication to the third principal and in interacting with the third principal.

In still another embodiment, at 140, a third processing makes a new request to the processing. That new request may desire specific attribute information associated with the first principal. In this embodiment, the processing acquires a new contract for the third principal vis-à-vis the first principal and evaluates it at 150 for purposes of acquiring a new credential for the third principal. That new credential is then transmitted to the third principal at 160 and can be subsequently used by that third principal to authenticate with or prove existing authentication to the first principal and to acquire the needed attribute information about the first principal from the first principal or from one or more identity stores associated with the first principal.

In still more embodiments, at 140, the first principal can dynamically alter an existing relationship with the second principal or a third principal. This is done, if the contract permits and can be achieved in the following manner. The first principal requests a modification to one or more policies defined in the credential. The processing receives this request as a modification to the contract. That modification can be permanent or can be temporary and can be defined in the contract or defined in a global policy associated with the contract. Accordingly, if the contract or global policy permits, the permanent version of the contract or an active temporary version of the contract is updated with the modification. This will result in a modified credential being generated or assembled at 150, and, at 160, that modified credential is transmitted to the first principal. In this way, a first principal can dynamically alter his relationship with a second principal. Furthermore, dynamic modifications do no t have to be initiated, in all embodiments, by the first principal. That is, the processing can independently detect changes in the one or more identity stores, independently initiate changes, or receive authorized direction for changes from an entirely different principal which modifies an existing credential of the first principal vis-à-vis a second principal.

Additionally, the processing can revoke credentials or remove active and temporary versions of contracts based on some detected expiring event. That event, can be defined in a particular global policy associated with a particular contract, or can be generated automatically when a session between a particular principal and the processing becomes stale or terminates normally or abnormally.

In still other embodiments, at 170, dynamic trust relationships can be established between the first and different principals during active sessions with the processing. This can be achieved in a variety of manners. For example, consider a first principal associated with a user and a second principal associated with a service, such as an on- line payment service. Consider further that the second principal requires secure communications that utilize public and private key pairs. That is, if the first principal sends a communication to the second principal that communication must be encrypted with the second principals public key, and if the second principal sends a different communication to the first principal it will be encrypted with the first principal's public key. Successful decryption of the communications requires the respective private keys of the first and second principals.

Consider also that the second principal has a static public-private key pair, such that the static public key can be acquired by trusted principals via a third principal (e. g., VERISIGN). In the present example, the processing is in a trust relationship with the first, second, and third principals. The first principal does not have a rooted and static public-private key pair, since the first principal is an end user who uses a portable computing device which physically moves around or an end user who may use different computing devices from time to time. Consequently, the second principal is not in a pre-established and trusted relationship with the first principal at any particular time when the first and second principals desire a trust relationship.

The processing, at 170, creates the desired dynamic trust relationship by receiving a request for the relationship from the first principal. Next, appropriate contracts associated with the first, second, and third principals are acquired and inspected. Moreover, the processing validates that the first, second, and third principals are in trusted relationships with the processing. Based on this evaluation, the processing satisfies itself that the trust relationship is permissible.

Accordingly, the processing instructs the first principal to generate a dynamic public- private key pair and provide the dynamically generated public key to the processing. The processing signs a certificate containing the dynamically generated public key with its own strongly rooted private key an updates this new certificate key to a trusted data store accessible to the second principal. Alternatively, a strongly rooted certificate and private key can be obtained at this time from a service (e. g., VERISIGN) belonging to the first principal and stored in the trusted data store.

The processing transmits this public key certificate to the second principal on informs it that the public into its local trusted data store. The processing also requests the static public key of the second principal from the third principal, in cases where a third principal manages the static public key on behalf of the second principal. In other cases, the processing has the static public key of the second principal or can request the same from the second principal. In any event, the processing then transmits the static public key of the second principal to the first principal. The first principal and the second principal can now securely communicate with one another using their respective public-private key pairs to encrypt and decrypt communications.

As yet another example application of embodiments of the invention, consider the following situation. Suppose, a user (first principal) uses a browser (client service embedded therein to interact with the processing) to initially authenticate (log in) to amazon.com (second principal). The browser authenticates the user to the processing and requests needed identity information for the client service to properly authenticate to amazon.com. The processing checks the contract for the authentication technique and needed identity information. The processing validates that no other restrictions are to be placed on the user for purposes of authentication and assembles the needed service policies and identity attributes which the browser will need to interact successfully with amazon.com. This information is embedded in a credential and transmitted to the browser. The browser passes the identity information included in the certificate to amazon.com directly, whereupon the user is successfully authenticated to amazon.com or the user has successfully asserted that he/ she is already properly authenticated to amazon.com via a SAML or Liberty assertion.

Continuing with the present example, consider that the user (first principal) has not stored and does not desire to store certain confidential information ( e. g., credit card information) with amazon.com, but during a session with amazon.com the user makes a purchase and attempts to check out (e. g., complete or finalize the purchase).

The user via the browser has the credential from the processing, when amazon.com asks the browser for a credit card number and expiration date. The user's browser can then instruct amazon.com that the purchase can be completed via a third principal, a payment service, such as Visa.com. The browser's credential tells it that amazon.com is not permitted to directly receive this type of attribute information and may tell amazon.com to contact a third principal or to contact the processing on details needed for completing this particular transaction. Consequently, amazon.com may directly contact visa.com or indirectly contact Visa.com via the processing. When Visa.com is contacted it may need to know how to authenticate to the user (first principal) in order to acquire needed information (attributes, specifically the user's credit card information).

Accordingly, to complete this transaction Visa.com contacts the processing with a request to access the first principal for purposes of acquiring a credit card number (specific attribute) to that user. The processing acquires a contract for a user-Visa.com relationship, evaluates it, authenticates Visa.com, and produces a credential for Visa.com to use to acquire the needed credit card information from the user. Alternatively, the processing authenticates Visa.com and acquires the needed credit card information directly from one or more identity stores associated with the user and the processing provides the same directly to Visa.com. In any event, Visa.com is able to properly debit a user's credit card and transmit notice of payment to amazon.com, which concludes the transaction.

In this last example it is noted that Visa.com may have never previously acquired or interacted with the user. The user may have never supplied amazon.com with the credit card number. Moreover, amazon.com did not need a permanently retained user credit card number and expiration date in order for amazon.com to successfully complete the transaction, which was originally initiated by the user. The above provided example is but one of many situations that can be realized with the teachings of this invention.

The embodiments of the processing teach novel techniques that permit a principal to dynamically authenticate and interacted with a variety of other principals. The processing can dynamically establish and manage these relationships. Moreover, the relationships can be dynamically altered. This also permits a principal or the processing to dynamically and temporarily or permanently change or alter relationships.

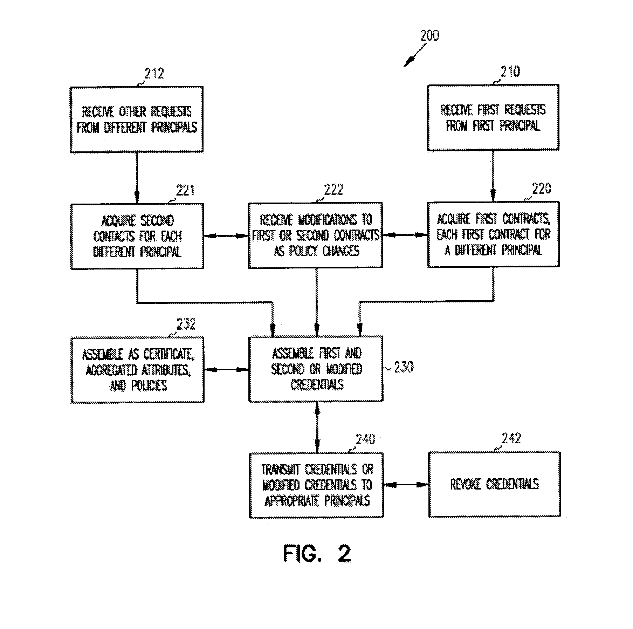

FIG. 2 is a flow chart of another method 200 for authenticating principals. The method is implemented in a computer- readable medium. In one embodiment, the processing of the method 200 (hereinafter " processing") is implemented as an identity service or authentication service that interacts with client services associated with principals.

Initially, at 210, the processing receives one more first access requests from a first principal. Those first access requests are formed and communicated from the first principals via client services of the first principals. In some embodiments, these client services are browser- enabled interfaces (e. g., applets, etc.) which are capable of interacting with the processing.

Prior to one or more of the first access requests, concurrent with one or more of the first access requests, or subsequent to one or more of the first access requests, at 212, the processing receives one or more other access requests from one or more different principals. Again, in some embodiments, these other access requests originate from client services associated with client processing devices of the different principals.

The access requests are made from one principal for purposes of authenticating to and interacting with another principal. Correspondingly, in manners similar to what has been discussed above with respect to FIG. 1, the processing, at 220, identifies the first principal and acquires first contracts for the first principal vis-à-vis the appropriate different principals defined in the first access requests. That is, each first access request from the first principal is uniquely associated with a particular different principal and associated with a different first contract. In a similar manner, at 221, each other access request from a particular different principal is associated with a particular second contract that defines authentication and interactions between that particular different principal and another principal.

Each acquired contract permits the processing to acquire specific authentication information, authentication techniques/ services, aggregated attributes, and aggregated policies. The contract specifies to the processing how to acquire this information from one or more identity stores associated with the appropriate principals that the subjects of a particular instance of a contract.

Once the appropriate information for a particular contract is assembled based on the strictures of that contract, at 230; the processing generates a credential for that particular contract. Thus, each first access request and first contract is associated with a first credential and each other access request and second contract is associated with a second credential. In some embodiments, at 231, one or more of the credentials is assembled as a certificate, aggregated attributes, and aggregated policies. The certificate includes the authentication information and authentication techniques/ services. In one embodiment, the actual needed authentication is performed by the processing on behalf of the two principals associated with a particular contract. In these embodiments, the certificate is expressed as an assertion which the two principals can rely upon as evidence that authentication has properly occurred. The assertion permits one of the principals to see how the processing performed authentication with respect to the other principal. In one embodiment, that assertion is a SAML or Liberty assertion.

Once the first and second credentials are assembled based on the directions of the first and second contracts, respectively, the processing, at 240, transmits the appropriate credentials to the original principals that issued the original access requests. These certificates can be used by the principals to authenticate (or prove existing authentication) and interact with one another.

In some embodiments, at 221, any particular principal can dynamically alter existing policies associated with a particular credential which that principal received from the processing. Correspondingly, the processing receives any such policy change request as a request to alter an existing contract for the requesting principal vis-à-vis some other principal. If the contract permits such a change or if a global policy of the contract permits such a change, then, the processing modifies the contract and generates a modified credential, at 230, for the requesting principal that reflects the modified policy and transmits the modified credential to the requesting principal at 240.

In some cases a modification can be permanent, in other cases the modification may be temporary (e. g., expires with the termination of a session of a principal, expires based on an event, expires based on a pre- defined global policy event, expires based on an event defined by the requesting principal, etc.). In still other situations, the modification need not originate from a principal that currently has a particular credential that is the subject of a modified credential. That is, a third principal (e. g., an administrator, someone with more security rights, etc.) can request, if policies and appropriate contracts permit, that certain policies of certain credentials being used by first and second principals be dynamically altered.

As one example of how a modification is useful and dynamic consider the following example. A first principal (Lloyd) is interacting in an interactive chat session with a second principal (group of other users). Lloyd is interacting based on a first credential received from the processing. That first credential provided Steve with the mechanism to authenticate and join in on the interactive chat with the group. How Lloyd receives and issues messages during the chat session is also defined in the first credential.

Suppose now that Lloyd knows that a different principal (Steve) is a member of the group (second principal) and Lloyd does not want Steve to see any posted messages from Steve and does not want Steve to see any messages that Lloyd generates. To achieve this, Lloyd requests a modified first credential from the processing where a policy is altered to exclude Steve from interacting with Lloyd. Assuming, Lloyd's contract with the group permits this policy change, the processing alters the contract (either permanently or temporarily) and issues Lloyd a modified first credential. Now, when Lloyd sends or receives messages to the group during the chat session, Steve is excluded.

Referring back to FIG. 2, at any point that the processing detects an expiring event for any particular credential, the processing, at 242, can revoke that credential and thereby terminate a relationship. An expiring event can be defined in a particular contract, defined in a global policy associated with a particular contract, and/ or defined by a system generated event (e. g., time outs for lack of activity, abnormal termination, and normal termination).

A variety of different scenarios are conceivable with the embodiments of this invention, in which dynamic modifications are useful in dynamically altering existing authenticated relationships and interactions. All such scenarios that use the teachings presented herein are intended to fall within the scope of the invention. Thus, the example presented above was intended to be illustrative and not limiting.

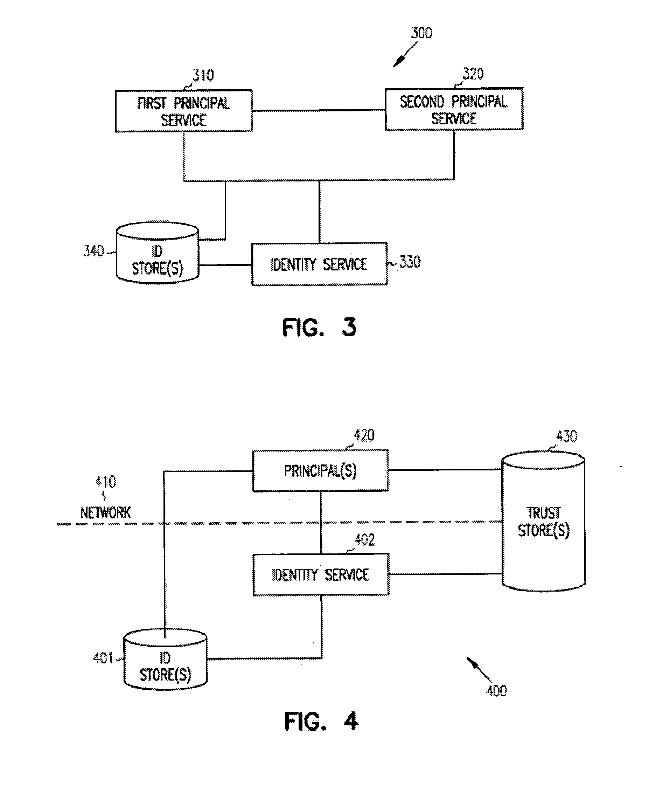

FIG. 3 is a diagram of one principal authentication system 300. The principal authentication system is implemented in a computer- readable medium and is accessible and processed over a network. The architectural layout of the principal authentication system 300 is presented for purposes of illustration and comprehension only. A variety of other configurations is possible and is intended to fall within the generous scope of the present invention.

The principal authentication system 300 includes a first principal service 310, a second principal service 320, and an identity service 320. In some embodiments, the first principal service 310 is accessible locally on a client (e. g. processing device) of a first principal, and the second principal service 320 is accessible locally on a client of the second principal. In other embodiments, the first and second principal services 310 and 320 are embodied partially in the local environments of each of the principal's client and embodied partially as a separate service that is external to each of the principal's client. The principal services 310 and 320 are interfaces to interacting with the identity service 330.

The identity service 330 manages authentication and trusted relationships occurring between multiple principals, where each separate principal has a principal service 310 or 320 that interacts with the identity service 330. The identity service 330 can be used in manners similar to what has been described above with respect to methods 100 and 200 of FIGS. 1 and 2, respectively.

Primarily, the identity service 330 is contacted by the principal services 310 and 320 when communications between principals are initiated. The identity service 330 will provide the principal services 310 and 330 with credentials that define authentication, aggregated attributes, and aggregated policies which will define and manage sessions occurring between the principals.

However, as was discussed above, the identity service 330 can also be used to dynamically alter selective aggregated attributes or selective aggregated policies that are being used to manage an existing and on- going session between principals. The dynamic modifications can be initiated by principals associated with an existing credential, can be initiated by the identity service 320, or can be initiated by principals with proper authority that are not the subject of a credential being modified.

Additionally, at any point, the identity service 330 can decide that an existing credential needs to be revoked. This can occur based on any defined event that can be trapped and recognized by the identity service 330 which directs the identity service 330 to revoke a credential. When a credential is revoked, the identity service 330 may also elect to remove the associated contract from its active memory, such that that contract has to be re- acquired before it is useful to the identity service 330 in generating or assembling an associated credential.

The identity service 330 acquires a particular contract based on the identities of principals which are to be used in a particular authentication and interactions. The principal services 310 and 320 provide these principal identities to the identity service 330. The contracts can be separately housed in data stores under the control of the identity service 330, or a single global contract can be housed for a particular principal, such that any needed contract is dynamically derived from the global contract as a sub contract by the identity service 330.

Contracts are specifications which inform the identity service 330 as to what authentication information, authentication techniques/ services, aggregated attributes, and aggregated policies are needed for a particular principal to principal relationship. In some embodiments, these specifications direct the identity service 330 to particular identity stores 340 where the needed information can be acquired and direct the identity service 330 on how that needed information is to be formatted for use by the principals.

In one embodiment, the identity service 330 performs authentication on behalf of a particular first principal service 310 for authenticating to a second principal service 320, using authentication information and mechanisms required by that second principal service 320. In this embodiment, it may be that the first and second principal services are SAML and/ or Liberty enabled, such that once authentication of a first principal ( interacting via the first principal service 310) is authenticated to a second principal ( interacting via the second principal service 320), the technique used and the fact that authentication was successfully achieved can be represented as an assertion within a credential generated by the identity service 330. That assertion is relied upon and can be validated by the second principal service 320.

In still other embodiments, the identity service 330 does not perform the authentication for the first principal on behalf of the second principal. This may occur when the second principal is a legacy service (e. g. such as a legacy web service) that may require an identification and a password pair for authentication. In these embodiments, the identity service 330 acquires a needed identification and password pair for the first principal and communicates the same to the first principal service 310 in the credential. The first principal service 310 then uses that identification and password pair to directly authenticate to the second principal.

In yet other embodiments, the identity service 330 may elect to depict certain identity information associated with the authentication information included with a credential as aliased identity information. The aliased identity mapping to the original identity is maintained exclusively by the identity service 330 and updated to the appropriate identity stores 340. In this way, the first and second principal services 310 and 320 are unaware of the aliased identity but can communicate successfully with one another as long as the aliased identity is maintained in the identity stores 340. At any point, the identity service 330 may detect and event which forces it to remove the alias identity from the identity stores 340.

Moreover, when an alias identity is used, in some embodiments, a legacy second principal can communicate directly with its identity store 340 or what it believes to be its identity store 340 for purposes of authenticating a first principal. For example, consider a legacy service that represents the second principal. That legacy service authenticates other principals via an identity store 340 by using a Lightweight Directory Access Protocol (LDAP) associated with an LDAP session to pass an identification and password pair to an LDAP service that will query the identity store 340 to determine if the identification and password pair is valid. The identity service 330 may have updated an identity store 340 with an aliased identification and password pair, but the identity service may not have had access to a specific legacy identity store 340 which the legacy service uses. In these situations, an LDAP bind (pointer) associated with the LDAP service that the legacy service accesses can be modified unbeknownst to the legacy service to point to the correct identity store 340 where the aliased information is housed. The LDAP service returns a success indication to the legacy service, and the first principal is successfully authenticated. The legacy service was not modified and it believes that it has just performed authentication in the manner that it always does, and yet, it has not. In fact, the legacy service has been seamlessly and dynamically integrated into the processing of the authentication system 300, by simply changing a pointer or bind associated with the LDAP service that the legacy service typically uses.

A credential generated by the identity service 330 includes not only authentication information, authentication techniques/ services, but also includes aggregated attributes and policies which will drive and define interactions between principals associated with a particular relationship and defined by a particular contract. Again, the attributes define identity store 340 data fields associated with a particular principal's confidential data and the policies define how the values of these fields can be accessed, processed, or not accessed and not processed.

FIG. 4 is a diagram of another principal authentication system 400. The principal authentication system 400 is implemented in a computer readable medium and is capable of being accessed configured and installed over a network. Again, the architectural layout and configuration of the principal authentication system 400 is presented for purposes of illustration only and is not intended to limit embodiments of this invention.

The principal authentication system 400 includes one or more identity stores 401 and an identity service 402. The identity service 402 and the identity stores 401 are accessible over a network 410 to one or more principals 420. The principals 420 interact with the identity service 402 via client services associated with computing devices which the principals 420 are using.

The identity service 402 interacts with the principals 420 for purposes of dynamically defining a new principal-to-principal relationship and for purposes of dynamically managing, terminating, or modifying that relationship. When a dynamic relationship is initially established, the identity service 402 acquires a contract for the relationship and evaluates that contract for purposes of assembling or generating a credential that will define and manage that relationship.

A credential includes authentication information, authentication techniques/ services, aggregated attributes, and aggregated policies. In one embodiment, the authentication information and authentication techniques/ services are represented as a certificate in the credential. The certificate can be expressed as an assertion if desired. Moreover, any needed authentication between any particular principal-to-principal relationship can be achieved by the identity service 402 or can be performed by a requesting principal 420. Additionally, as has been discussed in detail above, some or portions of the authentication information included with the credential can be aliased by the identity service 402.

In some embodiments, each of the principal's 420 environments and the environment of the identity service 402 can include separate trust data stores 430. For purposes of comprehension and ease of illustration these multiple trust data stores 430 are depicted as a single trust data store 430 which straddles the separate environments. In one embodiment, the identity service 402 maintains trusted relationships with each of the principals 420 in its separately maintained trust data store 430. Moreover, each of the principals 420 maintains its trusted relationships with the identity service 402 in its respective trusted data stores 430.

During operation, a particular principal 420 may need or desire a dynamic secure communication and trusted relationship with a different principal 420. However, the individual trusted data stores 430 of these two principals 420 do not include identifiers which would permit such a trusted relationship.

In this situation, the identity service 402 can facilitate and establish the needed dynamic trust relationship and secure communication in the following way. A requesting principal 420 makes the request to the identity service 402, a contract is acquired, a credential generated, and the identity service's 402 trusted data store 430 inspected. If everything is in order to permit the relationship, the identity service 402 acquires any needed public keys for both the principals 420 involved and transmits the same to the other of the principals 420. The identity service 402 then instructs the principals 420 to add the other of the principals 402 and the public key to their respective trust data stores 430. The two principals 420 can now communicate in a secure and trusted manner. This occurred dynamically, and even though one of the two principals 420 may have dynamically generated a needed public-private key pair based on conditions similar to what was described above with the example presented in the description of FIG. 1.

Although specific embodiments have been illustrated and described herein, those of ordinary skill in the art will appreciate that any arrangement calculated to achieve the same purpose can be substituted for the specific embodiments shown. This disclosure is intended to cover all adaptations or variations of various embodiments of the invention. It is to be understood that the above description has been made in an illustrative fashion only. Combinations of the above embodiments, and other embodiments not specifically described herein will be apparent to one of ordinary skill in the art upon reviewing the above description. The scope of various embodiments of the invention includes any other applications in which the above structures and methods are used.

## Claims

1. A computer-implemented method for authenticating a principal, comprising:
receiving (110) an access request from a first principal for access to a second principal;
evaluating (120) a contract to acquire a credential for the first principal, wherein the contract is a data structure which identifies identifier information for the first principal and an authentication technique for the first principal to authenticate to the second principal; and
transmitting (130) the credential to the first principal for use (170) in interacting with the second principal, wherein the credential includes authentication information,
**characterized in that** the contract includes directives that permit attribute information and policies of the first principal to be assembled from a variety of data stores into aggregated attributes and aggregated policies for use by the first principal in interacting directly with the second principal.

2. The method of claim 1, further comprising determining (121) if the first principal is authenticated based on the contract and if the first principal is not authenticated establishing an authentication session with the first principal to properly authenticate the first principal based on the contract.

3. The method of claim 1, further comprising:
receiving (140) an additional access request from the first principal for access to a third principal;
evaluating a new contract to acquire a second credential for the first principal; and
transmitting (160) the second credential to the first principal for use (170) in interacting with the third principal.

4. The method of claim 1, further comprising removing (180) the contract or revoking the credential when an expiring event is detected during a session with the first principal.

5. The method of claim 1, further comprising:
receiving (212) a new request from a third principal, wherein the new request desires attribute information associated with the first principal;
acquiring (221) a new contract for the third principal;
evaluating (230) the new contract to acquire a new credential for the third principal; and
transmitting (240) the new credential to the third principal for use in authenticating and interacting with the first principal to acquire the attribute information.

6. The method of claim 1, further comprising:
receiving (222) a modification to the contract from the first principal;
determining if the modification is permissible according to the contract;
updating the contract if the modification is permissible;
deriving (230) a modified credential from the contract; and
transmitting (240) the modified credential to the first principal for use in interacting with the second principal.

7. The method of claim 1, further comprising:
receiving a new request from the first principal for establishing a trust relationship with the second principal, wherein the trust relationship is established via communications having public-private key pairs between the first principal and the second principal;
determining if the trust relationship is permissible;
receiving a dynamically generated public key from the first principal associated with a dynamically generated private key, the dynamically generated private key maintained by the first principal; and
making the dynamically generated public key accessible to the second principal.

8. The method of claim 7, further comprising:
receiving from a third principal a static rooted public key associated with the second principal; and
transmitting the static rooted public key to the first principal for use in interacting with the second principal in the trust relationship.

9. The method of claim 1, wherein receiving comprises:
receiving (210) first requests from a first principal to interact with one or more different principals;
acquiring (220) first contracts for the first principal, wherein each first contract is associated with a different one of the one or more different principals;
acquiring a second contract for each of the one or more different principals; and wherein evaluating and transmitting comprise;
selectively assembling (230) and transmitting (240) first credentials for the first requests for use by the first principal in interacting with the one or more different principals;
and selectively assembling (230) and transmitting (240) second credentials for other requests associated with and used by the one or more different principals when interacting with the first principal or when interacting with different ones of the one or more different principals.

10. The method of claim 9, further comprising:
receiving modifications to one or more of the first contracts from the first principal or from one or more of the one or more different principals;
selectively assembling and transmitting modified first credentials to the first principal based on the modifications.

11. The method of claim 9, further comprising:
receiving (222) modifications to one or more of the second contracts from the first principal or from the one or more of the one or more different principals;
selectively assembling (230) and transmitting (240) modified second credentials to the one or more different principals affected by the modifications.

12. The method of claim 9, further comprising:
detecting an event that renders one or more of the first or second contracts stale; and
revoking (242) one or more of the first or second credentials which are affected by the event.

13. The method of claim 9, wherein the selectively assembling (230) of the first and second credentials further includes:
acquiring (232) appropriate authentication certificates for each of the first and second credentials; and
acquiring (232) aggregated attribute information and aggregated policies for each of the authentication certificates.

14. The method of claim 13, further comprising, expressing the authentication certificates within the first and second credentials as assertions.

15. The method of claim 13, wherein the acquiring (232) the authentication certificates, the aggregated attribute information, and the aggregated policies further includes accessing one or more identity stores having authentication information, attributes, and access policies associated with the first principal and the one or more different principals.

16. A computer-networked principal authentication system (300), comprising:
a first principal service (310);
a second principal service (320); and
an identity service (330), wherein the identity service acquires and manages a first contract on behalf of the first principal service and a second contract on behalf of the second principal service, and wherein the identity service provides a first credential to the first principal service and a second credential to the second principal service, the credentials used by the first principal service and the second principal service to interact with one another,
**characterized in that** the first and second contracts are data structures which identify identifier information for the first and second principals, respectively, and
wherein first and second contracts further identify directives for aggregating attribute information and policies from a variety of data stores for each of the principals.

17. The principal authentication system of claim 16, wherein the first or the second credential is dynamically modified by the identity service (330) and communicated to the affected principal service (310, 320).

18. The principal authentication system of claim 17, wherein the dynamic modification to the first or the second credential is driven by modifications received from the first principal service (310) or the second principal service (320).

19. The principal authentication system of claim 17, wherein the dynamic modification to the first or the second credential is driven by modifications received from a third principal service authorized to provide the dynamic modification.

20. The principal authentication system of claim 16, wherein the identity service (330) includes alias identity information in at least one of the first and the second credentials.

21. The principal authentication system of claim 16, wherein the first and second credentials include a first certificate for the first principal and a second certificate for the second principal, the certificates include identity information and techniques for authenticating the first and second principals.

22. The principal authentication system of claim 21, wherein the first and second credentials further include aggregated attribute information and aggregated policies for the first and second principals, the aggregated attribute information identifying types of data associated with the first and second principals and the aggregated policies defining operations which are permissibly performed or not permitted during the first and the second principal interactions.

23. The principal authentication system (400) of claim 16, comprising one or more identity stores (401);
wherein the identity service (402) dynamically establishes and manages authentication and interactions for a plurality of principals (420) with respect to sessions occurring between the principals, the identity service acquires contracts for each of the principals and dynamically assembles one or more credentials for each of the principals for use in the sessions with one another, the one or more credentials assembled from the one or more identity stores based on the contracts.

24. The principal authentication system of claim 23, wherein the identity service (402) substitutes alias identity information for identity information included within a number of the credentials.

25. The principal authentication system of claim 24, wherein the identity service (402) updates one or more of the identity stores (401) with the alias identity information.

26. The principal authentication system of claim 23, wherein the credentials include authentication certificates used for authentication the principals (420) to one another during the sessions.

27. The principal authentication system of claim 26, wherein the credentials further include selective aggregated attributes and aggregated policies acquired from the one or more identity stores (401) according to the contracts, the selective aggregated attributes identify types of data associated with the principals (420), and the selective aggregated policies identify at least one of permissible operations and non-permissible operations that can be processed against the selective aggregated attributes during the sessions between the principals.

28. The principal authentication system of claim 23, further comprising a trust data store (430) associated with the identity service (402) and separate trust data stores (430) associated with each of the principals (420), wherein the identity service manages the trust data store and authorizes the principals to dynamically update their respective separate trust data stores with selective identities and key information associated with the principals during the sessions between the principals.

29. The principal authentication system of claim 23, wherein the identity service (402) communicates modified credentials to the principals (420) during interactions between the principals.

30. The principal authentication system of claim 23, wherein the identity service (402) revokes a number of the credentials for the principals (420) when expiring events are detected.

31. A computer program product which when executing on a computer network performs the method of any one of claims 1 to 15.

## Patentansprüche

1. Computer-implementiertes Verfahren zum Authentifizieren einer Haupteinrichtung, umfassend:
ein Empfangen (110) einer Zugangsanforderung von einer ersten Haupteinrichtung für einen Zugang zu einer zweiten Haupteinrichtung;
ein Evaluieren (120) eines Vertrages zum Erwerben eines Berechtigungsnachweises für die erste Haupteinrichtung, wobei der Vertrag eine Datenstruktur ist, die eine Identifikator-Information für die erste Haupteinrichtung identifiziert, und eine Authentifizierungs-Technik für die erste Haupteinrichtung zum Authentifizieren bei einer zweiten Haupteinrichtung; und
ein Senden (130) des Berechtigungsnachweises an die erste Haupteinrichtung zum Nutzen (170) beim Interagieren mit der zweiten Haupteinrichtung, wobei der Berechtigungsnachweis eine Authentifizierungsinformation enthält,
**dadurch gekennzeichnet, daß** der Vertrag Direktiven enthält, die es erlauben, Kennzeicheninformationen und Richtlinien der ersten Haupteinrichtung aus einer Anzahl von Datenspeichern in aggregierte Kennzeichen und aggregierte Richtlinien zusammenzusetzen, zum Nutzen durch die erste Haupteinrichtung im direkten Interagieren mit der zweiten Haupteinrichtung.

2. Verfahren nach Anspruch 1, weiterhin umfassend ein Bestimmen (121), ob die erste Haupteinrichtung auf Grundlage des Vertrages authentifiziert ist, und, falls die erste Haupteinrichtung nicht authentifiziert ist, ein Aufbauen einer Authentifizierungssitzung mit der ersten Haupteinrichtung, um die erste Haupteinrichtung auf Grundlage des Vertrages richtig zu authentifizieren.

3. Verfahren nach Anspruch 1, weiterhin umfassend:
ein Empfangen (140) einer zusätzlichen Zugangsanforderung von der ersten Haupteinrichtung für einen Zugang zu einer dritten Haupteinrichtung;
ein Evaluieren (150) eines neuen Vertrags zum Erwerben eines zweiten Berechtigungsnachweises für die erste Haupteinrichtung; und
ein Senden (160) des zweiten Berechtigungsnachweises an die erste Haupteinrichtung zum Nutzen (170) beim Interagieren mit der dritten Haupteinrichtung.

4. Verfahren nach Anspruch 1, weiterhin umfassend ein Entfernen (180) des Vertrages oder ein Verwerfen des Berechtigungsnachweises, wenn ein Verfallsvorgang während einer Sitzung mit der ersten Haupteinrichtung detektiert wurde.

5. Verfahren nach Anspruch 1, weiterhin umfassend:
ein Empfangen (212) einer neuen Anfrage durch eine dritte Haupteinrichtung, wobei die neue Anfrage eine mit der ersten Haupteinrichtung verbundene Kennzeicheninformation verlangt;
ein Erwerben (221) eines neuen Vertrages für die dritte Haupteinrichtung;
ein Evaluieren (230) des neuen Vertrages zum Erwerben eines neuen Berechtigungsnachweises für die dritte Haupteinrichtung; und
ein Senden (240) des neuen Berechtigungsnachweises an die dritte Haupteinrichtung zum Nutzen beim Authentifizieren und Interagieren mit der ersten Haupteinrichtung, um die Kennzeicheninformation zu erwerben.

6. Verfahren nach Anspruch 1, weiterhin umfassend:
ein Empfangen (222) einer Modifizierung für den Vertrag durch die erste Haupteinrichtung;
ein Bestimmen ob die Modifizierung nach dem Vertrag zulässig ist;
ein Aktualisieren des Vertrages wenn die Modifizierung zulässig ist;
ein Ableiten (230) eines modifizierten Berechtigungsnachweises aus dem Vertrag; und
ein Senden (240) des modifizierten Berechtigungsnachweises an die erste Haupteinrichtung zum Nutzen beim Interagieren mit der zweiten Haupteinrichtung.

7. Verfahren nach Anspruch 1, weiterhin umfassend:
ein Empfangen einer neuen Anfrage von der ersten Haupteinrichtung zum Einrichten einer zuverlässigen Beziehung mit der zweiten Haupteinrichtung, wobei die zuverlässige Beziehung über Kommunikationen mit öffentlichen-persönlichen Schlüsselpaaren zwischen der ersten Haupteinrichtung und der zweiten Haupteinrichtung eingerichtet wird;
ein Bestimmen ob die zuverlässige Beziehung zulässig ist;
ein Empfangen eines dynamisch generierten, öffentlichen Schlüssels von der ersten Haupteinrichtung, mit einem dynamisch generierten, persönlichen Schlüssel verbunden, wobei der dynamisch generierte, persönliche Schlüssel durch die erste Haupteinrichtung erhalten wird; und
ein Erschließen des dynamisch genierten Schlüssels für die zweite Haupteinrichtung.

8. Verfahren nach Anspruch 7, weiterhin umfassend:
ein Empfangen eines mit einer zweiten Haupteinrichtung verbundenen statisch verwurzelten, öffentlichen Schlüssels von einer dritten Haupteinrichtung; und
ein Senden des statisch verwurzelten öffentlichen Schlüssels an die erste Haupteinrichtung zum Nutzen beim Interagieren mit der zweiten Haupteinrichtung in der zuverlässigen Beziehung.

9. Verfahren nach Anspruch 1, wobei das Empfangen umfasst:
ein Empfangen (210) einer ersten Anforderung von einer ersten Haupteinrichtung, um mit einer oder mehreren unterschiedlichen Haupteinrichtungen zu interagieren;
ein Erwerben (220) eines ersten Vertrags für die erste Haupteinrichtung, wobei jeder erste Vertrag mit einer unterschiedlichen der einen oder mehreren unterschiedlichen Haupteinrichtungen verbunden ist.
ein Erwerben eines zweiten Vertrags für jede der einen oder mehreren unterschiedlichen Haupteinrichtungen; und wobei ein Evaluieren und ein Senden umfasst;
ein selektives Zusammensetzen (230) und ein Senden (240) erster Berechtigungsnachweise für die ersten Anforderungen zum Nutzen durch die erste Haupteinrichtung beim Interagieren mit der einen oder mehreren unterschiedlicher Haupteinrichtungen;
ein selektives Zusammensetzen (230) und ein Senden (240) zweiter Berechtigungsnachweise für die anderen Anforderungen, die mit einer oder mehreren unterschiedlichen Haupteinrichtungen verbunden sind und durch sie benutzt werden, wenn sie mit der ersten Haupteinrichtung interagieren oder wenn sie mit unterschiedlichen der einen oder mehreren unterschiedlichen Haupteinrichtung interagieren.

10. Verfahren nach Anspruch 9, weiterhin umfassend:
ein Empfangen von Modifikationen für einen oder mehrere der ersten Verträge von der ersten Haupteinrichtung oder von einer oder mehreren der einen oder mehreren unterschiedlichen Haupteinrichtung;
ein selektives Zusammensetzen und ein Senden des auf den Modifizierungen basierenden modifizierten ersten Berechtigungsnachweisen an die erste Haupteinrichtung.

11. Verfahren nach Anspruch 9, weiterhin umfassend:
ein Empfangen (222) von Modifikationen für einen oder mehrere der zweiten Verträge von der ersten Haupteinrichtung oder von einem oder mehreren der einen oder mehreren unterschiedlichen Haupteinrichtungen;
ein selektives Zusammensetzen (230) oder Senden (240) der modifizierten zweiten Berechtigungsnachweise an den einen oder an mehrere von den Modifikationen betroffene unterschiedliche Haupteinrichtungen.

12. Verfahren nach Anspruch 9, weiterhin umfassend:
ein Detektieren eines Ereignisses, das ein Verfallen eines oder mehrerer der ersten und zweiten Verträge ermöglicht; und
ein Aufheben (242) eines oder mehrerer der von dem Ereignis betroffenen ersten und zweiten Berechtigungsnachweise.

13. Verfahren nach Anspruch 9, wobei das selektive Zusammensetzen (230) der ersten und zweiten Berechtigungsnachweises weiterhin beinhaltet:
ein Erwerben (232) eines geeigneten Authentifizierungszertifikats für jeden der ersten und zweiten Berechtigungsnachweise; und
ein Erwerben (232) aggregierter Kennzeicheninformationen und aggregierter Richtlinien für jedes der Authentifizierungszertifikate.

14. Verfahren nach Anspruch 13, weiterhin umfassend ein Formulieren der Authentifizierungszertifikate innerhalb der ersten und zweiten Berechtigungsnachweise als Behauptungen.

15. Verfahren nach Anspruch 13, wobei das Erwerben (232) der Authentifizierungszertifikate, der aggregierten Kennzeicheninformationen und der aggregierten Richtlinien weiterhin ein Aufrufen eines oder mehrerer Identitätsspeicher mit Authentifizierungsinformationen, Kennzeichen und Zugangsrichtlinien enthält, die mit der ersten Haupteinrichtung und der einen oder mehreren unterschiedlicher Haupteinrichtungen verbunden sind.

16. Comupter-vernetztes Haupteinrichtungs-Authentifizierungssystem (300), umfassend:
einen ersten Haupteinrichtungs-Service (310);
einen zweiten Haupteinrichtungs-Service (320); und
einen Identitäts-Service (330), wobei der Identitäts-Service einen ersten Vertrag im Auftrag des ersten Haupteinrichtungs-Services und einen zweiten Vertrag im Auftrag des zweiten Haupteinrichtungs-Services erwirbt und leitet, und wobei der Identitäts-Service einen ersten Berechtigungsnachweis für den ersten Haupteinrichtungs-Service and einen zweiten Berechtigungsnachweis für den zweiten Haupteinrichtungs-Service bereitstellt, und wobei die durch den ersten Haupteinrichtungs-Service und den zweiten Haupteinrichtungs-Service genutzten Berechtigungsnachweis miteinander interagieren,
**dadurch gekennzeichnet, daß** die ersten und zweiten Verträge Datenstrukturen sind, die eine Identifizierungsinformation für die jeweils erste und zweite Haupteinrichtung identifizieren, und wobei die ersten und zweiten Verträge weiterhin Direktiven zum Aggregieren von Kennzeicheninformationen und Richtlinien aus einer Vielzahl von Datenspeichern für jede der Haupteinrichtungen identifizieren.

17. Haupteinrichtungs-Authentifizierungssystem nach Anspruch 16, wobei der erste und der zweite Berechtigungsnachweis durch den Identitäts-Service (330) dynamisch modifiziert werden und an die betroffenen Haupteinrichtungs-Services (310, 320) kommuniziert werden.

18. Haupteinrichtungs-Authentifizierungssystem nach Anspruch 17, wobei die dynamische Modifizierung für den ersten oder den zweiten Berechtigungsnachweis durch Modifizierungen getrieben werden, die von dem ersten Haupteinrichtungs-Service (310) oder von dem zweiten Haupteinrichtungs-Service (320) empfangen wurden.

19. Haupteinrichtungs-Authentifizierungssystem nach Anspruch 17, wobei die dynamische Modifizierung für den ersten oder den zweiten Berechtigungsnachweis durch Modifizierungen getrieben werden, die von einem dritten Haupteinrichtungs-Service empfangen wurden, der autorisiert ist, die dynamischen Modifizierungen bereitzustellen.

20. Haupteinrichtungs-Authentifizierungssystem nach Anspruch 16, wobei der Identitäts-Service (330) eine Alias-Identitätsinformation in zumindest einer der ersten und der zweiten Berechtigungsnachweise enthält.

21. Haupteinrichtungs-Authentifizierungssystem nach Anspruch 16, wobei die ersten und zweiten Berechtigungsnachweise ein erstes Zertifikat für die erste Haupteinrichtung und ein zweites Zertifikat für die zweite Haupteinrichtung enthält, wobei die Zertifikate eine Identitätsinformation und Techniken zum Authentifizieren der ersten und zweiten Haupteinrichtung enthalten.

22. Haupteinrichtungs-Authentifizierungssystem nach Anspruch 21, wobei die ersten und zweiten Berechtigungsnachweise weiterhin aggregierte Kennzeicheninformationen und aggregierte Richtlinien für die ersten und zweiten Haupteinrichtungen enthalten, wobei die aggregierte Kennzeicheninformation Datentypen identifiziert, die mit den ersten und zweiten Haupteinrichtungen verbunden sind, und wobei die aggregierten Richtlinien Arbeitsabläufe definiert, die zulässig durchführbar sind oder die nicht erlaubt sind während des Interagierens der ersten und der zweiten Haupteinrichtung.

23. Haupteinrichtungs-Authentifizierungssystem (400) nach Anspruch 16, das einen oder mehrere Identitätsspeicher (401) umfasst;
wobei der Identitäts-Service (402) eine Authentifizierung und Interaktionen für eine Vielzahl von Haupteinrichtungen (420) dynamisch bereitstellt und leitet im Bezug auf zwischen den Haupteinrichtungen erfolgenden Sitzungen, wobei der Identitäts-Service Verträge für jede der Haupteinrichtungen erwirbt und einen oder mehrere Berechtigungsnachweises für jede der Haupteinrichtungen dynamisch zusammensetzt zum Nutzen in den Sitzungen untereinander, wobei ein oder mehrere Berechtigungsnachweise aus einem oder mehreren Identitätsspeicher auf Grundlage der Verträge zusammengesetzt werden.

24. Haupteinrichtungs-Authentifizierungssystem nach Anspruch 23, wobei der Identitäts-Service (402) eine Alias-Identitätsinformation für eine IdentitätsInformation ersetzt, die in einer Zahl von Berechtigungsnachweisen enthalten sind.

25. Haupteinrichtungs-Authentifizierungssystem nach Anspruch 24, wobei der Identäts-Service (402) einen oder mehrere der Identitätsspeicher (401) mit der Alias-Identitätsinformation aktualisiert.

26. Haupteinrichtungs-Authentifizierungssystem nach Anspruch 23, wobei die Berechtigungsnachweise Authentifizierungs-Zertifikate enthalten, die zum Authentifizieren der Haupteinrichtungen (420) untereinander während der Sitzungen genutzt werden.

27. Haupteinrichtungs-Authentifizierungssystem nach Anspruch 26, wobei die Berechtigungsnachweise weiterhin selektiv aggregierte Kennzeichen und selektiv aggregierte Richtlinien enthalten, die von einem oder mehreren Identitätsspeicher (401) entsprechend der Verträge erworben wurden, wobei die selektiv aggregierten Kennzeichen mit den Haupteinrichtungen (420) verbundene Datentypen identifizieren, und wobei die selektiv aggregierten Richtlinien zumindest einen der zulässigen Arbeitsabläufe und nicht-erlaubten Arbeitsabläufe identifiziert, die gegen die selektiv aggregierten Kennzeichen während den Sitzungen zwischen den Haupteinrichtungen verarbeitet werden können.

28. Haupteinrichtungs-Authentifizierungssystem nach Anspruch 23, weiterhin umfassend einen zuverlässigen Vertrauens-Datenspeicher (430), verbunden mit dem Identitäts-Service (402), und separate Vertrauens-Datenspeicher (430), verbunden mit jeder der Haupteinrichtungen, wobei der Identitäts-Service den zuverlässigen Vertrauens-Datenspeicher leitet und die Haupteinrichtungen autorisiert, ihre jeweiligen separaten Vertrauens-Datenspeicher mit selektiven Identitäten und Schlüsselinformation, die mit den Haupteinrichtungen verbunden sind, während der Sitzungen zwischen den Haupteinrichtungen dynamisch zu aktualisieren.

29. Haupteinrichtungs-Authentifizierungssystem nach Anspruch 23, wobei der Identitäts-Service (402) modifizierte Berechtigungsnachweise an die Haupteinrichtungen (420) während des Interagierens zwischen den Haupteinrichtungen kommuniziert.

30. Haupteinrichtungs-Authentifizierungssystem nach Anspruch 23, wobei der Identitäts-Service (402) eine Zahl der Berechtigungsnachweise für die Haupteinrichtungen (420) widerruft, wenn Verfallsereignisse detektiert werden.

31. Computerprogramm-Erzeugnis, das die Verfahren nach irgendeinem der Ansprüche 1 bis 15 durchführt, wenn es in einem Computer-Netzwerk ausgeführt wird.

## Revendications

1. Procédé mis en oeuvre par ordinateur pour authentifier un commettant, comprenant :
la réception (110) d'une requête d'accès d'un premier commettant pour accéder à un deuxième commettant ;
l'évaluation (120) d'un contrat pour acquérir un pouvoir pour le premier commettant, où le contrat est une structure de données qui identifie des informations d'identificateur pour le premier commettant et une technique d'authentification pour le premier commettant pour s'authentifier auprès du deuxième commettant ; et
la transmission (130) du pouvoir au premier commettant pour utilisation (170) dans l'interaction avec le deuxième commettant, où le pouvoir comprend des informations d'authentification,
**caractérisé en ce que** le contrat inclue des directives qui permettent à des informations d'attributs et à des règles du premier commettant d'être assemblés à partir d'une pluralité de stockages de données en attributs composites et en règles
composites pour l'utilisation par le premier commettant dans l'interaction directe avec le deuxième commettant.

2. Procédé selon la revendication 1, comprenant en outre la détermination (121) du fait que le premier commettant est authentifié sur la base du contrat et, si le premier commettant n'est pas authentifié, l'établissement d'une session d'authentification avec le premier commettant pour authentifier correctement le premier commettant sur la base du contrat.

3. Procédé selon la revendication 1, comprenant en outre :
la réception (140) d'une requête d'accès additionnelle du premier commettant pour accéder à un troisième commettant ;
l'évaluation (150) d'un nouveau contrat pour acquérir un deuxième pouvoir pour le premier commettant ; et
la transmission (160) du deuxième pouvoir au premier commettant pour utilisation (170) dans l'interaction avec le troisième commettant.

4. Procédé selon la revendication 1, comprenant en outre l'élimination (180) du contrat ou la révocation du pouvoir quand un événement d'expiration est détecté durant une session avec le premier commettant.

5. Procédé selon la revendication 1, comprenant en outre :
la réception (212) d'une nouvelle requête provenant d'un troisième commettant, où la nouvelle requête souhaite des informations d'attribut associées au premier commettant ;
l'acquisition (221) d'un nouveau contrat pour le troisième commettant ;
l'évaluation (230) du nouveau contrat pour acquérir un nouveau pouvoir pour le troisième commettant ; et
la transmission (240) du nouveau pouvoir au troisième commettant pour utilisation dans l'authentification et l'interaction avec le premier commettant pour acquérir les informations d'attribut.

6. Procédé selon la revendication 1, comprenant en outre :
la réception (222) d'une modification du contrat provenant du premier commettant ;
la détermination du fait que la modification est permise selon le contrat ;
la mise à jour du contrat si la modification est permise ;
l'obtention (230) d'un justificatif modifié à partir du contrat ; et
la transmission (240) du justificatif au premier commettant pour l'utilisation dans l'interaction avec le deuxième commettant.

7. Procédé selon la revendication 1, comprenant en outre :
la réception d'une nouvelle requête du premier commettant pour établir un rapport de confiance avec le deuxième commettant, où le rapport de confiance est établi via des communications ayant des paires de clés publique-privée entre le premier commettant et le deuxième commettant ;
la détermination du fait que le rapport de confiance est permis ;
la réception d'une clé publique générée dynamiquement provenant du premier commettant associé à une clé privée générée dynamiquement, la clé privée générée dynamiquement étant conservée par le premier commettant ; et
la mise à disposition de la clé publique générée dynamiquement au deuxième commettant.

8. Procédé selon la revendication 7, comprenant en outre :
la réception du troisième commettant d'une clé publique racine statique associée au deuxième commettant ; et
la transmission de la clé publique racine statique au premier commettant pour utilisation dans l'interaction avec le deuxième commettant dans le rapport de confiance.

9. Procédé selon la revendication 1, comprenant en outre :
la réception (210) de premières requêtes d'un premier commettant pour interagir avec un ou plusieurs commettants différents ;
l'acquisition (220) de premiers contrats pour le premier commettant, où chaque premier contrat est associé à l'un différent des un ou plusieurs commettants différents ;
l'acquisition d'un deuxième contrat pour chacun des un ou plusieurs commettants différents ; et dans lequel l'évaluation et la transmission comprennent ;
l'assemblage (230) et la transmission (240) de manière sélective de premiers justificatifs pour les premières requêtes pour utilisation par le premier commettant dans l'interaction avec un ou plusieurs commettants différents ;
et l'assemblage (230) et la transmission (240) de manière sélective de deuxièmes justificatifs pour d'autres requêtes associées à les un ou plusieurs commettants différents et utilisés par ceux-ci quand ils interagissent avec le premier commettant ou quand ils interagissent avec différents commettants des un ou plusieurs commettants différents.

10. Procédé selon la revendication 9, comprenant en outre :
la réception de modifications à un ou plusieurs des premiers contrats provenant du premier commettant ou provenant d'un ou plusieurs des un ou plusieurs commettants différents ;
l'assemblage et la transmission de manière sélective de premiers justificatifs modifiés au premier commettant sur la base des modifications.

11. Procédé selon la revendication 9, comprenant en outre :
la réception (222) de modifications d'un ou de plusieurs des deuxièmes contrats du premier commettant ou d'un ou plusieurs des un ou plusieurs commettants différents ;
l'assemblage (230) et la transmission (240) de manière sélective de deuxièmes justificatifs modifiés aux un ou plusieurs commettants différents affectés par les modifications.

12. Procédé selon la revendication 9, comprenant en outre :
la détection d'un événement qui rend un ou plusieurs des premiers et deuxièmes contrats périmés ; et
la révocation (242) d'un ou de plusieurs des premiers et deuxièmes justificatifs qui sont affectés par cet événement.

13. Procédé selon la revendication 9, comprenant en outre :
l'acquisition (232) de certificats d'authentification appropriés pour chacun des premiers et deuxièmes justificatifs ; et
l'acquisition (232) d'informations d'attributs composites et de règles composites pour chacun des certificats d'authentification.

14. Procédé selon la revendication 13, comprenant en outre l'expression des certificats d'authentification à l'intérieur des premiers et deuxièmes justificatifs comme des assertions.

15. Procédé selon la revendication 13, dans lequel l'acquisition (232) des certificats d'authentification, des informations d'attributs composites et des règles composites comprend en outre la vérification d'une ou plusieurs stockages d'identités ayant des informations d'authentification, attributs et règles d'accès associées au premier commettant et aux un ou plusieurs commettants différents.

16. Système d'authentification de commettants mis en réseau informatique (300), comprenant :
un premier service de commettant (310) ;
un deuxième service de commettant (320) ; et
un service d'identité (330), dans lequel le service d'identité acquiert et gère un premier contrat pour le compte du premier service de commettant et un deuxième contrat pour le compte du deuxième service de commettant, et dans lequel le service d'identité fournit un premier justificatif au premier service de commettant et un deuxième justificatif au deuxième service de commettant, les justificatifs étant utilisés par le premier service de commettant et le deuxième service de commettant pour interagir l'un avec l'autre,
**caractérisé en ce que** les premier et deuxième contrats sont des structures de données qui identifient des informations d'identificateur pour les premier et deuxième commettants, respectivement, et où les premier et deuxième contrats comprennent en outre des directives pour assembler des informations d' attributs et règles à partir d'une pluralité de stockages de données pour chacun des commettants.

17. Système d' authentification de commettants selon la revendication 16, dans lequel le premier ou le deuxième justificatif est modifié dynamiquement par le service d'identité (330) et communiqué au service de commettant concerné (310, 320).

18. Système d'authentification de commettants selon la revendication 17, dans lequel la modification dynamique sur le premier ou le deuxième justificatif est commandée par des modifications reçues du premier service de commettant (310) ou du deuxième service de commettant (320).

19. Système d'authentification de commettants selon la revendication 17, dans lequel la modification dynamique sur le premier ou le deuxième justificatif est commandée par des modifications reçues d'un troisième service de commettant autorisé à fournir la modification dynamique.

20. Système d'authentification de commettants selon la revendication 16, dans lequel le service d'identité (330) comprend des informations d'identité de pseudonyme dans au moins un des premier et deuxième justificatifs.

21. Système d'authentification de commettants selon la revendication 16, dans lequel les premier et deuxième justificatifs comprennent un premier certificat pour le premier commettant et un deuxième certificat pour le deuxième commettant, les certificats comprennent des informations d'identité et des techniques pour authentifier les premier et deuxième commettants.

22. Système d'authentification de commettants selon la revendication 21, dans lequel les premier et deuxième justificatifs comprennent en outre des informations d'attributs composites et des règles composites pour les premier et deuxième commettants, les informations d'attributs composites identifiant des types de données associés aux premier et deuxième commettants, et les règles composites définissant des opérations qui sont effectuées de manière permise ou qui ne sont pas permises durant les interactions des premier et deuxième commettants.

23. Système d'authentification de commettants (400) selon la revendication 16, comprenant une ou plusieurs stockages d'identités (401) ;
dans lequel le service d'identité (402) établit et gère dynamiquement l'authentification et les interactions pour une pluralité de commettants (420) par rapport à des sessions se produisant entre les commettants, le service d'identité acquiert des contrats pour chacun des commettants et assemble dynamiquement un ou plusieurs justificatifs pour chacun des commettants pour l'utilisation dans les sessions entre eux, les un ou plusieurs justificatifs étant assemblés à partir des une ou plusieurs stockages d'identités sur la base des contrats.

24. Système d'authentification de commettants selon la revendication 23, dans lequel le service d'identité (402) remplace des informations d'identité comprises dans un certain nombre des justificatifs par des informations d'identité de pseudonyme.

25. Système d'authentification de commettants selon la revendication 24, dans lequel le service d'identité (402) met à jour une ou plusieurs des stockages d'identité (401) avec les informations d'identité de pseudonyme.

26. Système d'authentification de commettants selon la revendication 23, dans lequel les justificatifs comprennent des certificats d'authentification utilisés pour l'authentification des commettants (420) entre eux durant les sessions.

27. Système d'authentification de commettants selon la revendication 26, dans lequel les justificatifs comprennent en outre des attributs composites et règles composites sélectifs acquis à partir des une ou plusieurs stockages d'identités (401) selon les contrats, les attributs composites sélectifs identifient des types de données associés aux commettants (420) et les règles composites sélectives identifient au moins une parmi des opérations permises et des opérations non permises qui peuvent être traitées par rapport aux attributs composites sélectifs durant les sessions entre les commettants.

28. Système d'authentification de commettants selon la revendication 23, comprenant en outre une stockage de données de confiance (430) associée au service d'identité (402) et des stockages de données de confiance séparées (430) associées à chacun des commettants (420), dans lequel le service d'identité gère le stockage de données de confiance et autorise les commettants à mettre à jour dynamiquement leurs stockages de données de confiance séparées respectives avec des identités et des informations de clés sélectives associées aux commettants durant les sessions entre les commettants.

29. Système d'authentification de commettants selon la revendication 23, dans lequel le service d'identité (402) communique des justificatifs modifiés aux commettants (420) durant des interactions entre les commettants.

30. Système d'authentification de commettants selon la revendication 23, dans lequel le service d'identité (402) révoque un certain nombre de justificatifs pour les commettants (420) quand des événements d'expiration sont détectés.

31. Produit de programme informatique qui, exécuté sur un réseau informatique, effectue le procédé selon l'une quelconque des revendications 1 à 15.
